Europäisches Patentamt

European Patent Office

Office européen des brevets

(19)

(11) Veröffentlichungsnummer: **0 048 469**

**A1**

(12) ## EUROPÄISCHE PATENTANMELDUNG

(21) Anmeldenummer: **81107422.8**

(22) Anmeldetag: **18.09.81**

(51) Int. Cl.³: **G 01 C 15/00**

(30) Priorität: **23.09.80 DE 3035785**

(43) Veröffentlichungstag der Anmeldung:
**31.03.82 Patentblatt 82/13**

(84) Benannte Vertragsstaaten:
**AT BE CH DE FR GB IT LI LU NL SE**

(71) Anmelder: **Höllfritsch, Erich, Dipl.-Volkswirt**
**Rainwiesenweg 21**
**D-8501 Behringsdorf(DE)**

(72) Erfinder: **Höllfritsch, Erich, Dipl.-Volkswirt**
**Rainwiesenweg 21**
**D-8501 Behringsdorf(DE)**

(74) Vertreter: **LOUIS, PÖHLAU, LOHRENTZ & SEGETH**
**Kesslerplatz 1**
**D-8500 Nürnberg(DE)**

(54) **Verfahren zum Anbringen niveauausgerichteter Markierungen.**

(57) Bei einem Verfahren zum Anbringen von niveauausgerichteten Markierungen auf Flächen wird eine gebündelte
Strahlung, vorzugsweise ein Laserstrahl verwendet, mit dem
durch Verschwenken in einer Horizontalebene die niveauausgerichteten Markierungen auf auf die Strahlung empfindliche Schichten erzeugt werden, die vor der Bestrahlung auf
den Flächen aufgebracht werden.

EP 0 048 469 A1

-1-

Verfahren zum Anbringen niveauausgerichteter
Markierungen

Die Erfindung betrifft ein Verfahren zum Anbringen von niveauausgerichteten Markierungen auf Wänden in Zusammenhang von Abhängigkeit dieser Markierungen durchzuführenden Nivellierarbeiten, wobei eine sich vom normalen Tageslicht in der Intensität oder Frequenz unterscheidende Strahlung, insbesondere ein Laserstrahl verwendet wird.

Ein solches Verfahren muß beispielsweise bei der Bestimmung des Meterrisses durchgeführt werden, von dem z.B. bei der Verlegung von Estrichen, beim Anbringen von Decken oder bei der Bestimmung der Höhe der Fenstersimse ausgegangen wird.

Nach den bekannten Verfahren muß jedoch die Auftreffstelle des Laserlichtes auf der senk-

-2-

recht stehenden Wand jeweils von Hand markiert werden. Dieses Vorgehen wird als umständlich und zeitraubend empfunden. Mit der Erfindung soll hier Abhilfe geschaffen werden.

Erfindungsgemäß wird nun zum Anbringen der niveauausgerichteten Markierungen auf den Wänden eine auf die Strahlung empfindliche, auf das normale Tageslicht aber weniger empfindliche Schicht verwendet.

Die unterschiedliche Empfindlichkeit der empfindlichen Schicht kann sich auf die Intensität oder aber auf das Spektrum bzw. auf die Frequenz beziehen, je nachdem, ob die Strahlung sich aufgrund ihrer Intensität oder aufgrund ihrer Frequenz bzw. Frequenzen vom normalen Tageslicht unterscheidet. In der Regel wird eine Wellenlänge im sichtbaren Bereich gewählt, wobei sich dann der Lichtstrahl vom normalen Tageslicht durch seine Intensität bei dieser Wellenlänge im Vergleich zur Intensität des Tageslichtes bei dieser Wellenlänge unterscheidet. Selbstverständlich ist in diesem Zusammenhang auch die Belichtungszeit maßgebend.

-3-

Vorteilhafterweise ist die empfindliche Schicht auf streifenförmige Unterlagen wie Papier aufgebracht, die an den Wänden zu befestigen sind.

Bei den empfindlichen Papierstreifen kann es sich vorzugsweise um einen auf Latentifikation reagierenden Papierstreifen handeln, bei dem eine Schwärzung bzw. ein distinktiver Farbunterschied nach der Latentifikation für längere Zeit erhalten bleibt.

Gegebenenfalls kann ein Ausbleichen der auf der empfindlichen Schicht erzeugten Markierung durch Einstreichen der Schicht nach der Bestrahlung mit einem Fixativ verhindert werden.

Zur Bestimmung des Meterrisses werden beispielsweise mehrere der oben angegebenen Papierstreifen in horizontalen Abständen, vorzugsweise an den für die Niveaugebung besonders relevanten Stellen des Bauwerks wie Türlaibungen, Säulen, Fensterlaibungen etc. sich vertikal erstreckend angebracht und wird dann ein Strahl, z.B. ein Laserstrahl, zur Erzeugung der Markierungen auf den Papierstreifen horizontal verschwenkt.

In der Praxis wurde als photoempfindlicher Papierstreifen Oszilloscript D von der Firma

-4-

Agfa verwendet. Das ist ein photographisches Papier mit direkter Schwärzung und bestimmt für das Registrieren von Oszillationen durch Lichtpunktlinienschreiber. Die Firma Agfa gibt 2 erg/cm$^2$ als Bestrahlungsenergie für die volle Schwärzung des Papiers an. Jedoch wurde festgestellt, daß die Bestrahlungsenergie um Größenordnungen bis 100 erg/cm$^2$ und mehr gewählt werden muß. Die Vorschubgeschwindigkeit des Lichtstrahls betrug bei Messungen ca. 1 cm/sec. Bei dieser Geschwindigkeit liegt die sinnvolle untere Leistungsgrenze für den Laser, der z.B. ein Argon-Ionenlaser sein kann, bei ca. 3 mW. Als Wellenlängen sind 514.5 nm, 488 nm, 476,5 nm und 457.8 nm gut geeignet. Anstatt mit kontinuierlichem Laserlicht zu arbeiten, kann auch mit relativ langen Impulsen gearbeitet werden. Ebenso ist es möglich, mehrere Wellenlängen gleichzeitig zu verwenden, indem man an die Stelle des Laserprismas einen Spiegel montiert. Ein Ausbleichen der Linien kann verhindert werden, indem das photoempfindliche Papier nach erfolgter Markierung mit Fixativ eingestrichen wird.

0048469

-1-

<u>Patentansprüche</u>

1. Verfahren zum Anbringen von niveauausgerichteten Markierungen auf Wänden in Zusammenhang von in Abhängigkeit dieser Markierungen durchzuführenden Nivellierarbeiten, wobei eine sich vom normalen Tageslicht unterscheidende Strahlung, insbesondere ein Laserstrahl verwendet wird, dadurch gekennzeichnet, daß zum Anbringen der niveauausgerichteten Markierungen auf den Wänden eine auf den Strahl empfindliche, auf das normale Tageslicht aber weniger empfindliche Schicht verwendet wird.

2. Verfahren nach Anspruch 1, dadurch gekennzeichnet, daß die empfindliche Schicht auf streifenförmigen Unterlagen wie Papier aufgebracht ist, die an den Wänden zu befestigen sind.

-2-

3. Verfahren nach Anspruch 2, dadurch gekennzeichnet, daß es sich bei der empfindlichen
   Schicht um eine Schicht handelt, die auf Latentifikation reagiert.

4. Verfahren nach einem der Ansprüche 1 bis 3,
   dadurch gekennzeichnet, daß die empfindliche Schicht nach der Bestrahlung mit einem
   Fixativ eingestrichen wird.

0048469

# EUROPÄISCHER RECHERCHENBERICHT

**Europäisches Patentamt**

Nummer der Anmeldung

EP 81 10 7422

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | FR - A - 2 217 710 (J. TRICE) <br> * Spalte 5, Zeile 37 - Seite 7, Zeile 14; Seite 18, Zeile 18 - Seite 19, Zeile 9 * <br> -- | 1 | G 01 C 15/00 |
| A | US - A - 3.982.839 (M. SCHWARTZ) <br> * Ganzes Dokument. * <br> ---- | 1 | |

**RECHERCHIERTE SACHGEBIETE (Int. Cl.³)**

G 01 C 15/00
15/02
104/06
104/08
G 01 B 11/27

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 29-12-1981 | DE BUYZER |

EPA form 1503.1  06.78